# EUROPÄISCHE PATENTSCHRIFT

(11) **EP 4 435 328 B1**
(45) Veröffentlichungstag und Bekanntmachung des Hinweises auf die Patenterteilung: **04.02.2026**
(21) Anmeldenummer: 24163423.7
(22) Anmeldetag: 14.03.2024
(51) Int. Cl.: F24C 15/16

(54) **HAUSHALTSGERÄT MIT EINEM RACKSYSTEM**
HOUSEHOLD APPLIANCE WITH A RACK SYSTEM
APPAREIL MÉNAGER AVEC UN SYSTÈME DE RACK

(30) Priorität: 24.03.2023 WO PCT/EP2023/057701
(43) Veröffentlichungstag der Anmeldung: 25.09.2024
(73) Patentinhaber: Paul Hettich GmbH & Co. KG, 32278 Kirchlengern (DE)
(72) Erfinder: BRAUN, Johann, 32120 Hiddenhausen (DE); LEßMANN, Johann-Sebastian, 32584 Löhne (DE); NOAK, Artur, 32547 Bad Oeynhausen (DE)
(74) Vertreter: Dantz, Jan Henning

(56) Entgegenhaltungen:
- DE-A1- 102019 116 189
- US-A1- 2012 097 147
- US-A1- 2014 285 078
- US-A1- 2021 071 876
- US-B1- 10 548 396
- US-B2- 10 876 737
- US-B2- 8 646 444

## Beschreibung

Die vorliegende Erfindung betrifft ein Haushaltsgerät mit einem Innenraum zur Aufnahme eines Racksystems, wobei an gegenüberliegenden Seiten des Innenraumes jeweils ein Wandelement vorgesehen ist und an mindestens einem der Wandelemente ein Verriegelungsvorsprung angeordnet ist, wobei das Racksystem ein im Innenraum angeordnetes stationäres Teil und ein über Führungen zumindest teilweise vor den Innenraum bewegbares Teil aufweist, und an dem stationären Teil ein Riegelelement zum lösbaren Eingriff mit dem Verriegelungsvorsprung vorgesehen ist, das über einen Mitnehmer an dem bewegbaren Teil in eine entriegelte Position bewegbar ist.

In der US 2012/0097147 A1 ist ein Backofen offenbart, bei dem ein Racksystem in einem Innenraum angeordnet ist. Das Racksystem umfasst einen stationären Teil, der im Backofen verbleibt, und einen auf dem Innenraum herausziehbaren Teil. Wenn der bewegbare Teil des Racksystems herausgezogen wird, sorgt ein drehbarer Riegel für eine Verriegelung des stationären Teils im Backofen. Dadurch wird die Sicherheit bei der Handhabung und Zubereitung von Speisen erhöht. Der Riegel ist dabei über eine Feder in die verriegelte Position vorgespannt und kann für eine Verriegelung mit einem Vorsprung in Eingriff gebracht werden. Bei einem Einfahren des bewegbaren Teils sorgt ein Mitnehmer für ein Verschwenken des Riegels gegen die Federkraft für eine Entriegelung. Der Einsatz einer Feder im Backofen ist nachteilig, weil gerade bei hohen Temperaturen, beispielsweise bei der Pyrolysereinigung, eine Beschädigung mit einer Beeinträchtigung der Vorspannkraft verbunden sein kann. Zudem erfordert der Verriegelungsmechanismus zahlreiche Bauteile, was die Montage und Herstellung aufwändig macht.

In der US 10,548,396 B1 ist eine Schiebevorrichtung für ein bewegbares Gitter gezeigt, das an gegenüberliegenden Seiten über eine Führung in Auszugsrichtung bewegbar ist. An einem stationären Teil ist am rückwärtigen Ende ein Haken vorgesehen, der beim Einschieben des Racks in eine angehobene Position gegen die Kraft einer Feder bewegt werden kann. Wird das Rack herausgezogen, hintergreift der Haken eine Verriegelung an der Rückwand und ist durch die Feder in die verriegelte Position vorgespannt. Die Verriegelung erfordert somit zusätzlichen Bauraum. Eine ähnliche Rackvorrichtung zeigt auch die US 2021/0071876 A1.

In der US 10,876,737 B2 ist eine Rackvorrichtung mit einem stationären Teil und einem bewegbaren Teil gezeigt, bei der zur Verriegelung ein Hebel über eine Feder in eine angehobene Position vorgespannt wird. Der Hebel kann in der Einzugsposition des beweglichen Teils gegen die Kraft der Feder nach unten gedrückt werden.

Es ist daher Aufgabe der vorliegenden Erfindung, ein Haushaltsgerät zu schaffen, bei dem ein Racksystem mit einfachen Mitteln zuverlässig in einem Innenraum verriegelt werden kann.

Diese Aufgabe wird mit einem Haushaltsgerät mit den Merkmalen des Anspruches 1 gelöst.

Bei dem erfindungsgemäßen Haushaltsgerät kann das Racksystem über mindestens ein Riegelelement lösbar in Eingriff mit einem Verriegelungsvorsprung an einem Wandelement gebracht werden, wobei das Riegelelement über einen Mitnehmer an dem bewegbaren Teil des Racksystems bewegbar ist, und das Riegelelement von einer Verriegelungsposition über den Mitnehmer in eine entriegelte Position bewegbar ist. Das Riegelelement wird dabei über den Mitnehmer von einer abgesenkten Verriegelungsposition in eine angehobene entriegelte Position oder von einer angehobenen Verriegelungsposition in eine abgesenkte entriegelte Position bewegt. Dadurch kann der Mitnehmer beispielsweise über eine Anlaufschräge das Riegelelement verschieben oder verschwenken und in die angehobene Position bewegen, so dass bei einer Bewegung des Mitnehmers in Auszugsrichtung das Riegelelement selbsttätig wieder in die abgesenkte Position bewegt werden kann. Dies ermöglicht einen einfachen Aufbau der Verriegelungsmechanik und eine zuverlässige Verriegelung.

Erfindungsgemäß ist das Riegelelement ausschließlich durch Schwerkraft von der entriegelten Position in die verriegelte Position bewegbar. Das Riegelelement muss somit nicht durch eine mechanische Feder in die Verriegelungsposition vorgespannt werden, so dass das Problem einer Fehleranfälligkeit durch eine Feder vermieden wird.

Das Anheben des Riegelelementes von der abgesenkten Verriegelungsposition in die angehobene entriegelte Position bezieht sich dabei auf den Schwerpunkt des Riegelelementes, der in der abgesenkten Verriegelungsposition tiefer ist als in der angehobenen entriegelten Position. Die Bewegung des Riegelelementes zwischen diesen Positionen ist dabei bevorzugt eine Schiebebewegung, eine Drehbewegung oder eine kombinierte Schiebe- und Drehbewegung. Für eine Drehbewegung kann das Riegelelement mit einem Lagerabschnitt um eine Achse drehbar gelagert sein, vorzugsweise um eine horizontale Achse oder um eine zur Horizontalen geneigte Achse.

Das Riegelelement ist bevorzugt verschwenkbar an dem stationären Teil gelagert. Dabei kann das Riegelelement um eine Achse drehbar gelagert sein, die sich im Wesentlichen parallel zur Auszugsrichtung des bewegbaren Teils erstreckt. Durch den Mitnehmer, der beispielsweise durch einen integralen Abschnitt des stationären Teils gebildet ist, kann das Riegelelement in eine angehobene Position verschwenkt werden, um eine Entriegelung zu bewirken. Das Riegelelement kann dabei einfach an dem stationären Teil montiert werden, wenn an diesem eine Klammer fixiert ist, die eine Lageraufnahme für das verschwenkbare Riegelelement bildet. Die Klammer kann beispielsweise an dem gitterförmigen stationären Teil angeschweißt sein.

Vorzugsweise ist der Verriegelungsvorsprung bezogen auf eine Auszugsrichtung des bewegbaren Teils im Bereich einer vorderen Hälfte des Wandelementes angeordnet. Dadurch ergibt sich ein kompakter Aufbau, und das Racksystem kann mit der identischen Verriegelung in unterschiedlichen Längen hergestellt werden.

Für eine stabile Verriegelung kann ein an dem Riegelelement vorgesehener Verriegelungsabschnitt bei einer Zugkraft auf den stationären Teil in Auszugsrichtung auf Druck belastet werden. Der Verriegelungsabschnitt liegt dabei einerseits mit einer Kontaktfläche an dem Verriegelungsvorsprung an und erstreckt sich bis zu einem Lager oder Halteabschnitt an dem stationären Teil. Der Verriegelungsabschnitt kann somit zuverlässig hohe Kräfte aufnehmen.

In einer weiteren Ausgestaltung umfasst das Riegelelement einen mit dem Mitnehmer in Eingriff bringbaren Betätigungsabschnitt, einen an dem Verriegelungsvorsprung anlegbaren Verriegelungsabschnitt und einen Lagerabschnitt zur drehbaren Lagerung des Riegelelementes, wobei der Lagerabschnitt zwischen dem Betätigungsabschnitt und dem Verriegelungsabschnitt angeordnet ist. Das Riegelelement bildet somit einen Doppelhebel aus, bei dem der Lagerabschnitt in einem mittleren Bereich vorgesehen ist und an gegenüberliegenden Seiten des Lagerabschnittes der Betätigungsabschnitt und der Verriegelungsabschnitt vorgesehen sind, wobei "gegenüberliegenden" sich nicht räumlich auf eine gegenüberliegende Anordnung bezieht, sondern nur auf die Ausgestaltung als Doppelhebel, bei der der Lagerabschnitt zwischen unterschiedlichen Hebeln angeordnet ist, die aber zusammen drehbar sind. Der Doppelhebel kann dabei einteilig oder mehrteilig ausgebildet sein.

Das Riegelelement weist vorzugsweise einen Ausleger auf, mittels dem der Verriegelungsabschnitt des Riegelelementes in eine angehobene verriegelte Position durch die Schwerkraft vorgespannt ist. Der Ausleger kann beispielsweise als Hebel ausgebildet sein, der durch die Schwerkraft das Riegelelement in eine vorbestimmte Drehrichtung vorspannt.

Der Mitnehmer ist bevorzugt in vertikaler Richtung oberhalb eines Betätigungsabschnittes des Riegelelementes angeordnet und drückt den Betätigungsabschnitt in der eingefahrenen Position des bewegbaren Teils nach unten. Dann kann der Betätigungsabschnitt beim Herausfahren des bewegbaren Teils nach oben bewegt werden, insbesondere verschwenken.

Das Riegelelement ist vorzugsweise aus einem gebogenen Draht gebildet, so dass die Funktionsfähigkeit auch bei hohen Temperaturen gewährleistet ist. Dabei kann das Riegelelement einen Betätigungsabschnitt aufweisen, der mit dem Mitnehmer an dem bewegbaren Teil zusammenwirkt und für eine Schwenkbewegung des Riegelelementes sorgt. Zudem kann das Riegelelement einen integral ausgebildeten Verriegelungsabschnitt aufweisen, der zu dem Wandelement hin bewegbar ist und in Eingriff mit dem Verriegelungsvorsprung bewegbar ist. Durch die Ausbildung des Riegelelementes als gebogenen Draht kann der Materialeinsatz gering gehalten werden, und zudem werden bei einem Verschwenken des Riegelelementes nur wenig Geräusche erzeugt.

Für eine leichtgängige Handhabung des Racksystems kann das stationäre Teil eine erste Schiene und das bewegbare Teil eine zweite Schiene umfassen, die über Wälzkörper verfahrbar aneinander gehalten sind. Optional kann zwischen der ersten Schiene und der zweiten Schiene eine auszugsverlängernde Mittelschiene vorgesehen sein, je nachdem, wie weit das bewegbare Teil des Racksystems vor den Innenraum verfahren werden soll. Bevorzugt sind die Schienen Teil einer Auszugsführung, die zwischen dem stationären Teil und dem bewegbaren Teil des Racksystems angeordnet ist. Das Racksystem bildet somit eine kompakte Einheit, die leicht aus dem Innenraum des Backofens entfernt werden kann.

Für eine sichere Verriegelung des Racksystems kann an dem stationären Teil benachbart zu jedem Wandelement ein Riegelelement vorgesehen sein, das ein Eingriff mit einem Verriegelungsvorsprung bringbar ist. Dadurch ist das stationäre Teil an gegenüberliegenden Seiten verriegelt, wenn der bewegbare Teil des Racksystems aus dem Innenraum herausgezogen wird. Das Riegelelement kann durch einen gebogenen Draht, ein Metallbleich oder hakenförmige Elemente gebildet sein. Das Riegelement greift bevorzugt mittig an einem Verriegelungsvorsprung nahe der Rückwand oder eines Seitengitters ein.

In einer ersten Variante ist der Verriegelungsvorsprung an einem Wandelement aus einem geprägten Metallblech hergestellt. Optional kann der Verriegelungsvorsprung integral mit einer Auflageleiste ausgebildet sein, die zur Aufnahme des stationären Teils des Racksystems dient, wobei der Verriegelungsvorsprung beispielsweise durch eine V-förmige Prägung hergestellt ist. In einer zweiten Variante ist der Verriegelungsvorsprung an einem Seitengitter ausgebildet, das an einer Wand an dem Innenraum festgelegt ist.

In einer bevorzugten Ausgestaltung ist das Haushaltsgerät als Backofen ausgebildet. Alternativ kann das Haushaltsgerät auch als Mikrowelle, Dampfgarer oder anderes Gerät zur Zubereitung von Lebensmitteln ausgestaltet sein.

Die Erfindung wird nachfolgend anhand von zwei Ausführungsbeispielen mit Bezug auf die beigefügten Zeichnungen näher erläutert. Es zeigen:

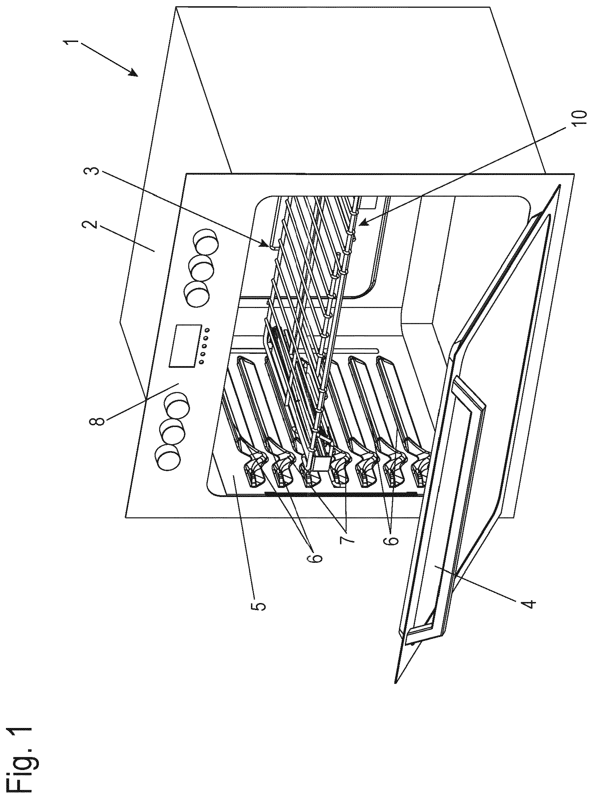

- Figur 1: eine perspektivische Ansicht eines erfindungsgemäßen Haushaltsgerätes;
- Figur 2: eine Vorderansicht des Haushaltsgerätes der Figur 1;
- Figur 3: eine Detailansicht des Haushaltsgerätes im Bereich des Racksystems;
- Figur 4A und 4B: zwei perspektivische Ansichten eines Racksystems in unterschiedlichen Positionen;
- Figur 5A und B: zwei Ansichten des Racksystems der Figuren 4A und 4B ohne das bewegbare Teil;
- Figuren 6A bis 6C: mehrere Detailansichten eines Verriegelungsmechanismus für das Racksystem in unterschiedlichen Positionen;
- Figuren 7A und 7B: zwei Ansichten des Verriegelungsmechanismus in der verriegelten Position;
- Figur 8: eine Detailansicht des Riegelelementes für den Verriegelungsmechanismus;
- Figur 9: eine perspektivische Ansicht eines modifizierten Haushaltsgerätes;
- Figur 10: eine Ansicht des Haushaltsgerätes der Figur 9 mit nur einem Wandelement;
- Figur 11: eine Detailansicht des Verriegelungsmechanismus des Haushaltsgerätes der Figur 9;
- Figur 12: eine Ansicht eines modifizierten Riegelelementes;
- Figuren 13A und 13B: zwei Detailansichten eines modifizierten Verriegelungsmechanismus für das Racksystem in unterschiedlichen Positionen;
- Figur 14: eine weitere Detailansicht eines modifizierten Verriegelungsmechanismus;
- Figur 15: eine perspektivische Ansicht eines modifizierten Haushaltsgerätes;
- Figur 16: eine Detailansicht des Racksystems des Haushaltsgerätes der Figur 15;
- Figuren 17 und 18: zwei perspektivische Ansichten des Racksystems der Figur 15 in unterschiedlichen Positionen;
- Figur 19: eine perspektivische Ansicht des stationären Teils des Racksystems der Figur 17;
- Figur 20: eine Detailansicht des Verriegelungsmechanismus des Racksystems der Figur 17 in der verriegelten Position, und
- Figur 21: eine Detailansicht des Verriegelungssystems des Racksystems der Figur 17 in der entriegelten Position.

Ein Haushaltsgerät 1 ist als Backofen ausgebildet und umfasst ein Gehäuse 2, insbesondere aus einem Metallblech, in dem ein Innenraum 3 vorgesehen ist. Der Innenraum 3 ist an einer Vorderseite geöffnet und durch eine verschwenkbare Tür 4 verschließbar.

An gegenüberliegenden Seiten des Innenraumes 3 ist jeweils ein Wandelement 5 vorgesehen, das aus einem profilierten Metallblech hergestellt ist und mehrere Auflageleisten 6 zur Auflage von Gargutträgern oder einem oder mehreren Racksystemen 10 aufweist. An jeder Auflageleiste 6 ist ein Verriegelungsvorsprung 7 ausgebildet, der als nach innen ragende V-förmige Prägung hergestellt ist, aber auch mit anderen Geometrien an dem Wandelement 5 vorgesehen werden kann.

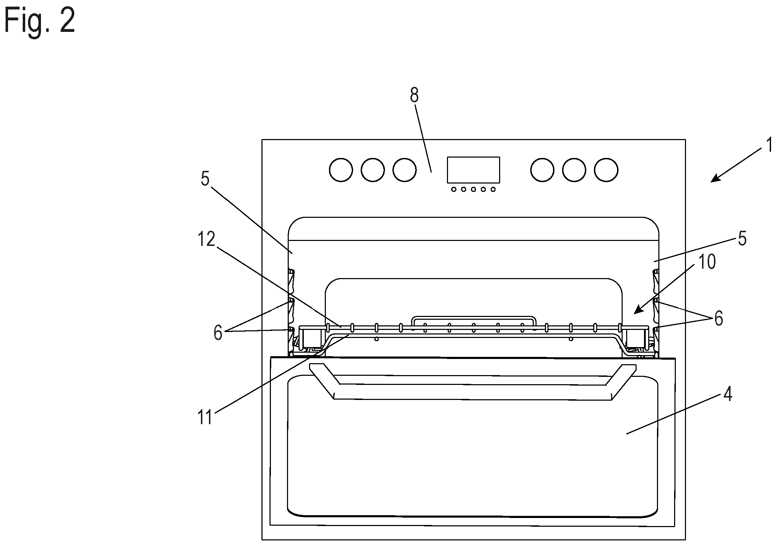

Wie in Figur 2 erkennbar ist, umfasst das Racksystem 10 einen stationären Teil 11, der an gegenüberliegenden Seiten auf Auflageleisten 6 aufliegt und in dem Innenraum 3 verbleibt. Ferner umfasst das Racksystem 10 einen bewegbaren Teil 12, der an gegenüberliegenden Seiten über Führungen an dem stationären Teil 11 gehalten ist und in eine Position vor dem Innenraum 3 bewegbar ist. Wird der bewegbare Teil 12 von dem stationären Teil 11 in eine Auszugsposition verfahren, wird der stationäre Teil 11 über mindestens eine Verriegelungsmechanik an einem Wandelement 5 fixiert.

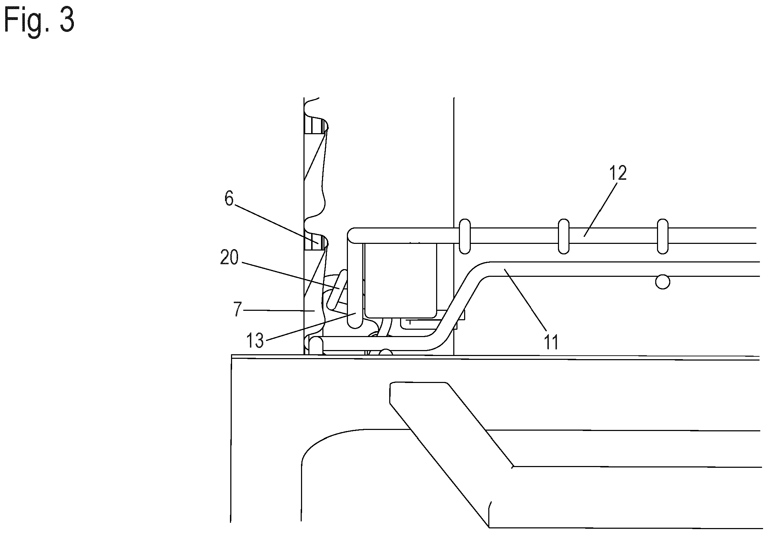

In Figur 3 ist ein Riegelelement 20 der Verriegelungsmechanik gezeigt, das verschwenkbar an dem stationären Teil 11 gehalten ist. Das Riegelelement 20 ist in einer entriegelten angehobenen Position dargestellt und kann beim Herausziehen des bewegbaren Teils 12 gegen den Uhrzeigersinn verschwenken, so dass ein Teil des Riegelelementes 20 hinter den Verriegelungsvorsprung 7 gelangt und den stationären Teil 11 gegen ein Herausziehen verriegelt. Das Riegelelement 20 kann dabei durch einen Mitnehmer 13 bewegt werden, der an dem bewegbaren Teil 12 des Racksystems 10 ausgebildet ist.

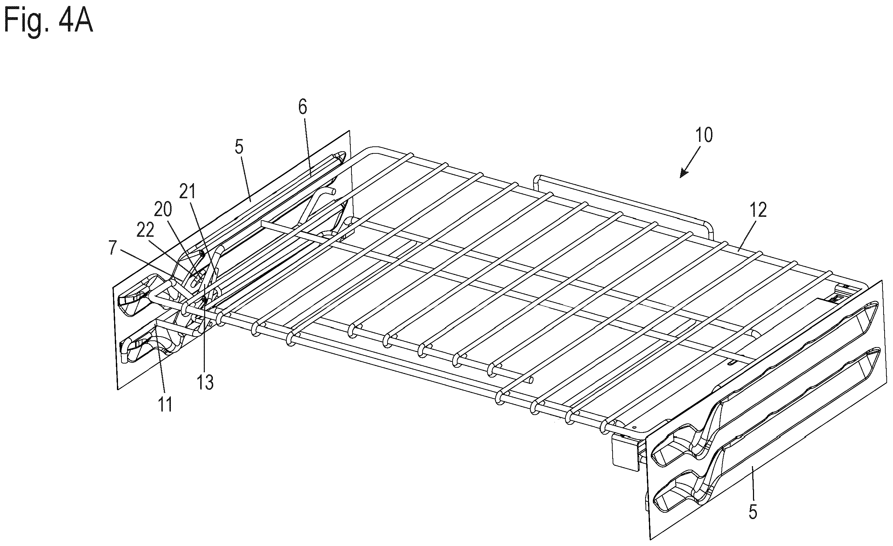

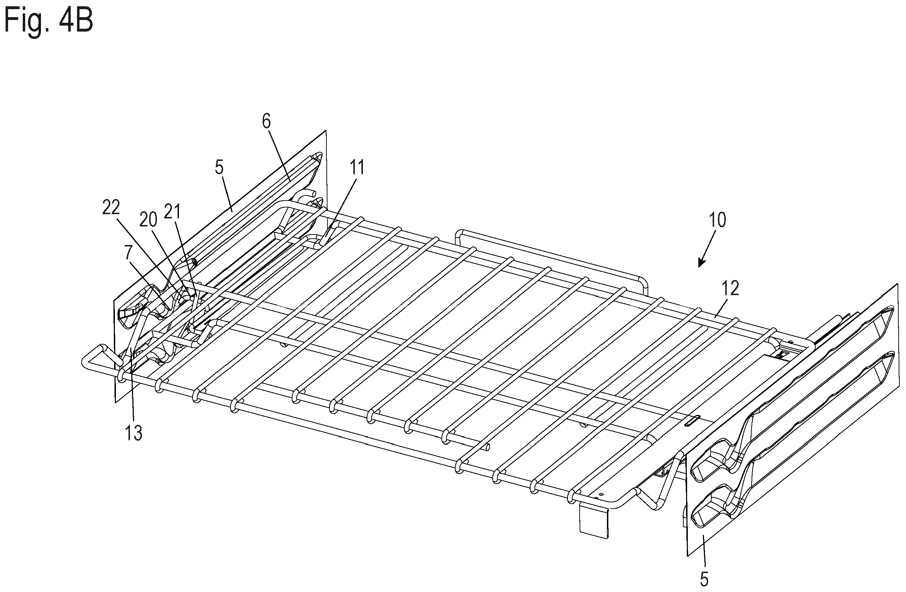

In Figur 4A ist ein Racksysteme 10 mit einem Ausschnitt der Wandelemente 5 in einer eingefahrenen und entriegelten Position gezeigt. Der bewegbare Teil 12 des Racksystems 10 ist über Führungen, insbesondere Auszugsführungen, an dem stationären Teil 11 gehalten und ist durch ein Gitter gebildet. Optional kann der bewegbare Teil 12 auch als Backblech oder anderer Träger ausgebildet sein. Auch der stationäre Teil 11 ist als Gitter oder Gestell ausgebildet und an gegenüberliegenden Seiten auf Auflageleisten 6 abgestützt. Das Racksystem ist in der eingefahrenen Position so angeordnet, dass der Mitnehmer 13 an dem bewegbaren Teil 12 das Riegelelement 20 über einen Betätigungsabschnitt 21 in einer entriegelten Position hält und das Racksystem 10 als Einheit aus dem Innenraum 3 herausgezogen werden kann. Das Racksystem 10 ist in Figur 4B in einer Auszugsposition dargestellt, da der bewegbare Teil 12 relativ zu dem stationären Teil 11 in Auszugsrichtung verfahren wurde. Dadurch hat sich der Mitnehmer 13 von dem Betätigungsabschnitt 21 des Riegelelements 20 entfernt, und dieses greift mit einem Verriegelungsabschnitt 22 hinter den Verriegelungsvorsprung 7, so dass der stationäre Teil 11 an der Wand 5 verriegelt ist.

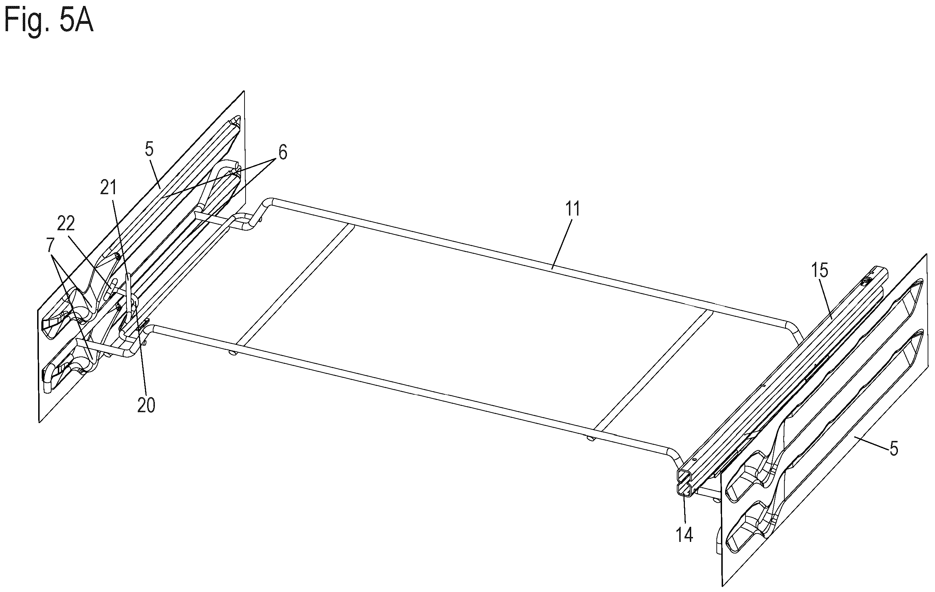

In Figur 5A ist nur der stationäre Teil 11 des Racksystems 10 in einer entriegelten Position gezeigt, der auf den Auflageleisten 6 der Wände 5 aufliegt. An dem stationären Teil 11 ist das Riegelelement 20 drehbar gelagert, wobei die Drehachse sich parallel zur Auszugsrichtung erstreckt. Ferner ist erkennbar, dass der bewegbare Teil 12 über eine Auszugsführung verfahrbar an dem stationären Teil 11 gehalten ist und die Auszugsführung eine stationäre Schiene 14 und eine bewegbare Schiene 15 umfasst, die über Wälzkörper aneinander gehalten sind. Optional kann zwischen der stationären Schiene 14 und der bewegbaren Schiene 15 eine auszugsverlängernde Mittelschiene angeordnet sein. Statt einer Auszugsführung mit Wälzkörpern kann auch eine Gleitführung zwischen dem stationären Teil 11 und dem bewegbaren Teil 12 vorgesehen sein.

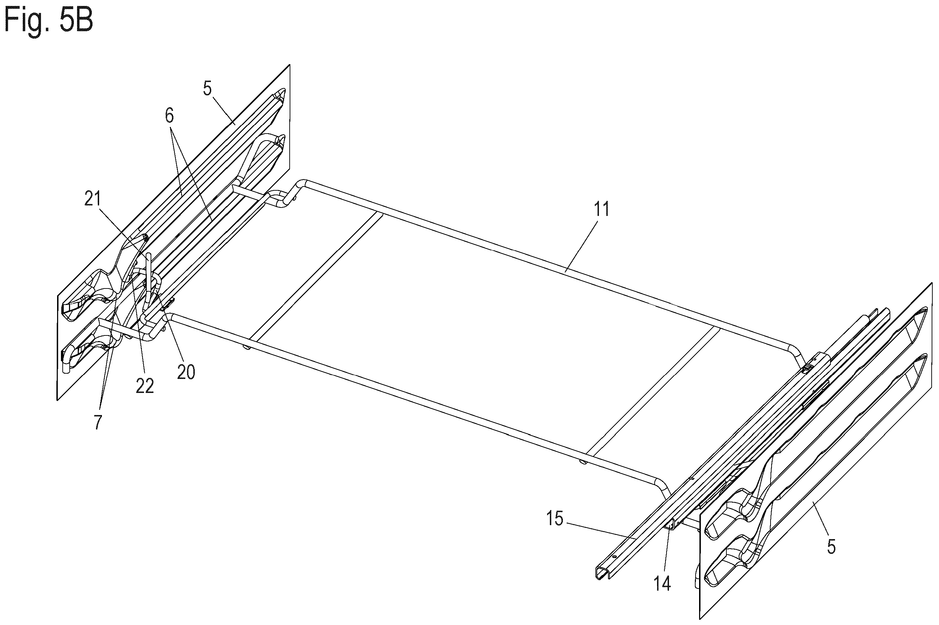

In Figur 5B ist der stationäre Teil 11 in einer verriegelten Position gezeigt, wenn die bewegbaren Schiene 15 sich mit dem nicht dargestellten bewegbaren Teil 12 in Auszugsrichtung bewegt hat. Dann verschwenkt das Riegelelement 20 in die Verriegelungsposition hinter dem Verriegelungsvorsprung 7.

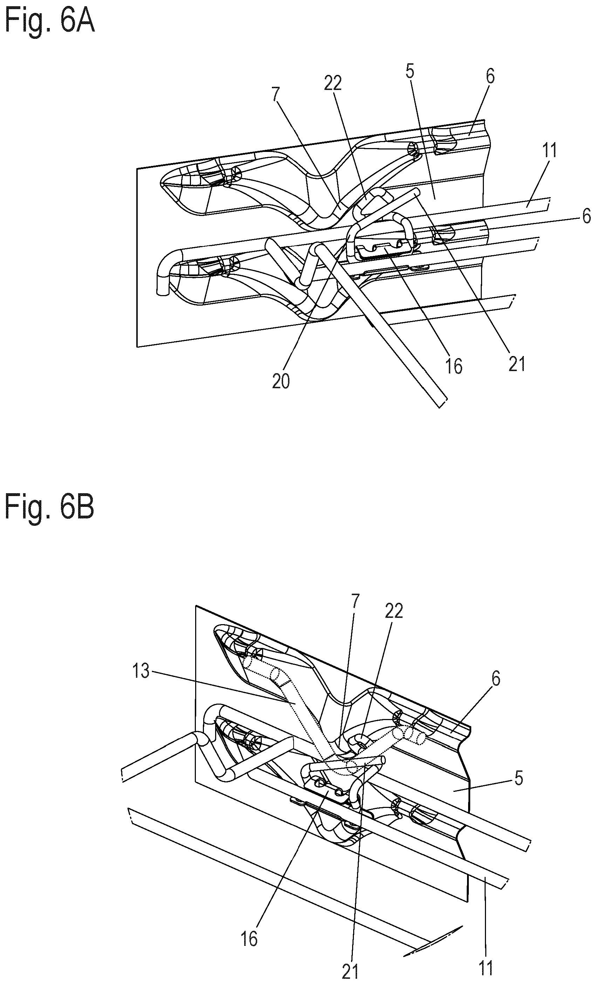

In den Figuren 6A bis 6C ist die Verriegelungsmechanik in unterschiedlichen Positionen gezeigt. In Figur 6A befindet sich das Riegelelement 20 in einer verriegelten Position, und ein Verriegelungsabschnitt 22 des Riegelelementes 20 ist in Auszugsrichtung hinter dem Verriegelungsvorsprung 7 angeordnet, so dass der stationäre Teil 11 in Auszugsrichtung blockiert ist. Das Riegelelement 20 ist an einer Klammer 16 drehbar gehalten, die eine Lageraufnahme ausbildet. Die Klammer 16 kann an einem Stab des stationären Teils 11 angeschweißt sein. Das Riegelelement 20 weist ferner einen schräg nach oben hervorstehenden Betätigungsabschnitt 21 auf.

In Figur 6B ist gezeigt, dass der Mitnehmer 13 an dem bewegbaren Teil 12 den Betätigungsabschnitt 21 kontaktieren kann, so dass der Betätigungsabschnitt 21 weg von dem Wandelement 5 verschwenkt wird. Der Mitnehmer 13 ist dabei als V-förmiger Abschnitt eines gebogenen Drahtes ausgebildet, kann aber auch eine andere Form besitzen.

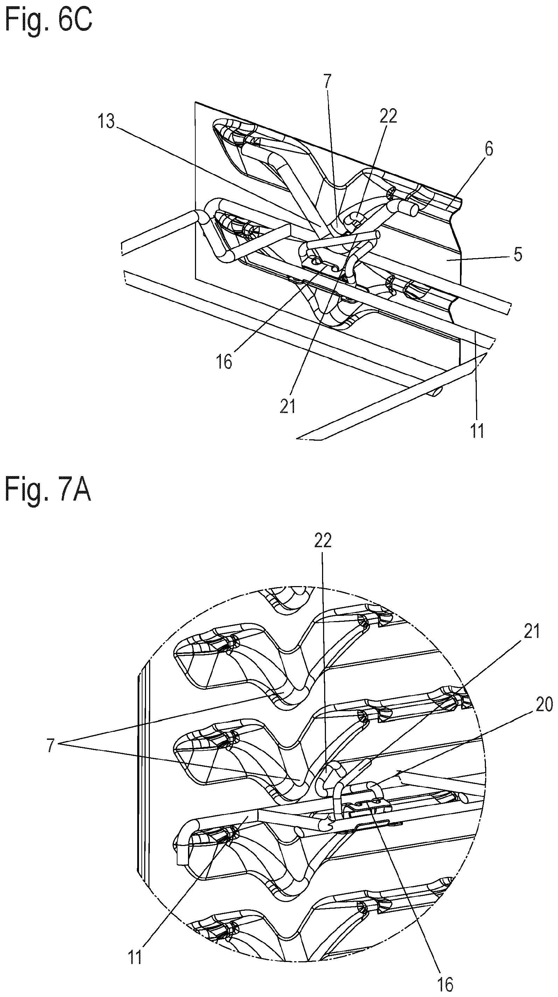

In Figur 6C ist eine entriegelte Position des Riegelelementes 20 gezeigt. Durch den Mitnehmer 13 ist der Betätigungsabschnitt 21 entlang einer Anlaufschräge an dem Mitnehmer 13 bewegt worden, so dass der Verriegelungsabschnitt 22 weg von dem Wandelement 5 verschwenkt wurde. In dieser Position kann das Racksystem 10 als Einheit aus dem Innenraum 3 entnommen werden.

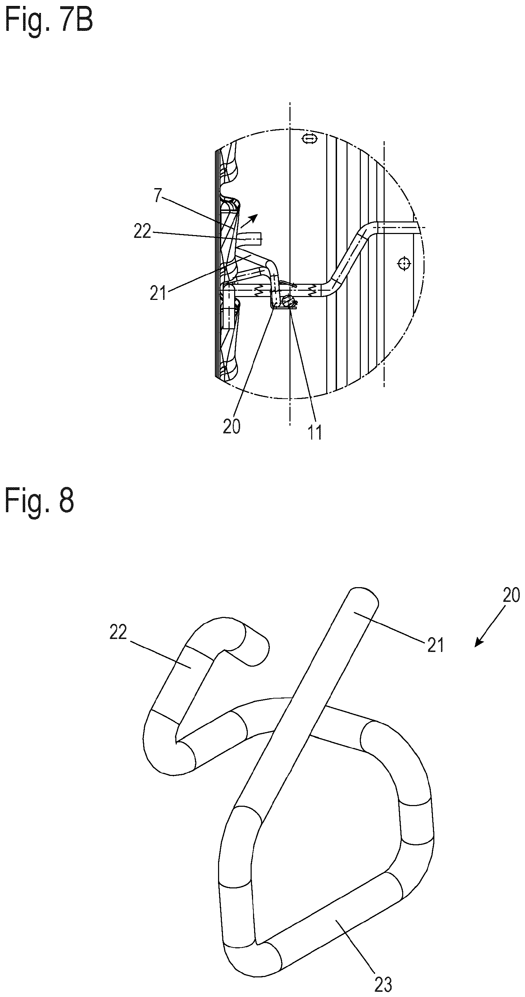

In den Figuren 7A und 7B ist das Riegelelement 20 in der verriegelten Position gezeigt. Die Klammer 16 bildet eine Lageraufnahme für einen Teil des Riegelelementes 20 aus, und der Verriegelungsabschnitt 22 kann gemäß Figur 7B für eine Entriegelung im Uhrzeigersinn schräg nach oben verschwenkt werden. In der entriegelten Position befindet sich das Riegelelement 20 somit in einer höheren Position bezogen auf den Schwerpunkt als in einer verriegelten Position. Der Verriegelungsabschnitt 22 und damit das Riegelelement 20 kann somit bei einem Herausziehen des bewegbaren Teils 11 selbsttätig durch die Schwerkraft in die Verriegelungsposition verschwenken.

In Figur 8 ist das Riegelelement 20 gezeigt, das aus einem gebogenen metallischen Draht hergestellt ist. Das Riegelelement 20 umfasst den stabförmigen Betätigungsabschnitt 21, der integral mit einem Lagerabschnitt 23 ausgebildet ist, der in der Lageraufnahme der Klammer 16 angeordnet ist. Integral mit dem Lagerabschnitt 23 ist auch der Verriegelungsabschnitt 22 ausgebildet, der zur Anlage an den Verriegelungsvorsprung 7 gelangen kann.

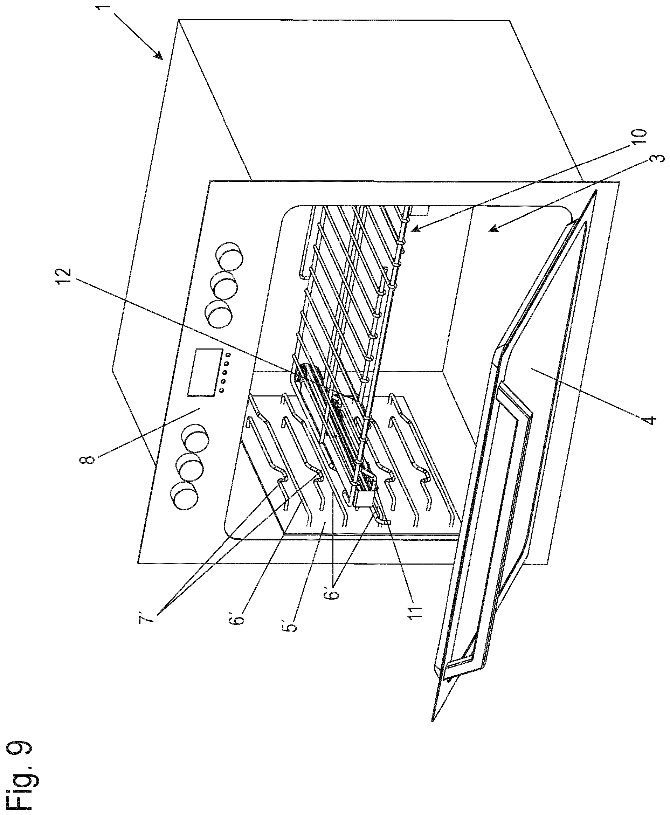

In Figur 9 ist ein modifiziertes Haushaltsgerät 1 gezeigt, das wie bei dem vorangegangenen Ausführungsbeispiel einen Innenraum 3 mit einem Racksystem 10 aufweist, allerdings ist ein Wandelement 5' vorgesehen, das nicht aus einem geprägten Metallblech gebildet ist, sondern ein Seitengitter umfasst mit horizontalen Stäben 6' zur Auflage des Racksystems 10. Das Seitengitter umfasst ferner Stäbe mit einem integral ausgebildeten Verriegelungsvorsprung 7', die durch eine Profilierung des Drahtes gebildet sind. Das Wandelement 5' kann vollständig als Seitengitter ausgebildet sein und an einer Wand an dem Innenraum 3 fixiert werden.

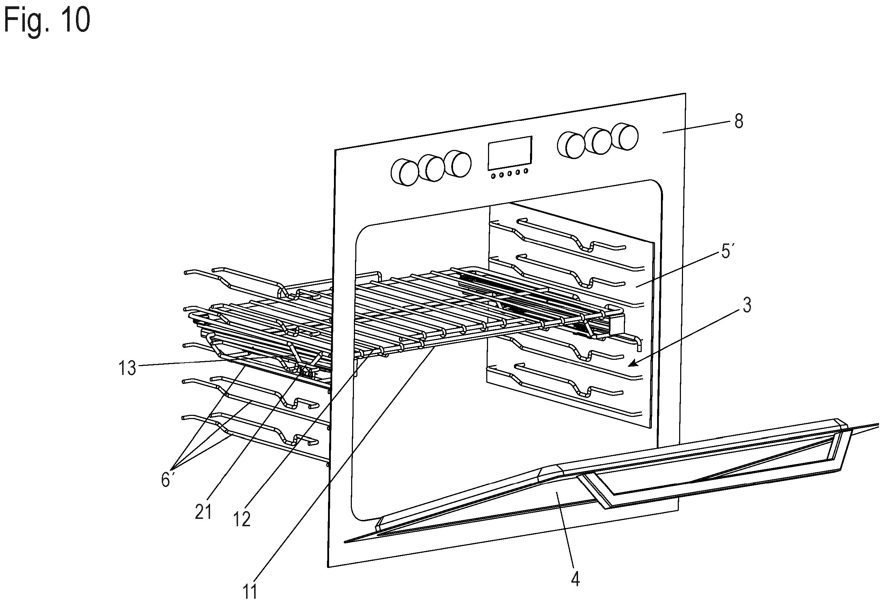

In Figur 10 ist das Haushaltsgerät 1 ohne das Wandelement 5' gezeigt, und es ist erkennbar, dass der Mitnehmer 13 des bewegbaren Teils 12 des Racksystems 10 einen Betätigungsabschnitt 21 eines Riegelelementes 20 kontaktiert, damit das Riegelelement in die entriegelte Position bewegt wird. Im Übrigen umfasst das Racksystem 10 wie bei dem vorangegangenen Ausführungsbeispiel an gegenüberliegenden Seiten Auszugsführungen zwischen dem bewegbaren Teil 12 und dem stationären Teil 11.

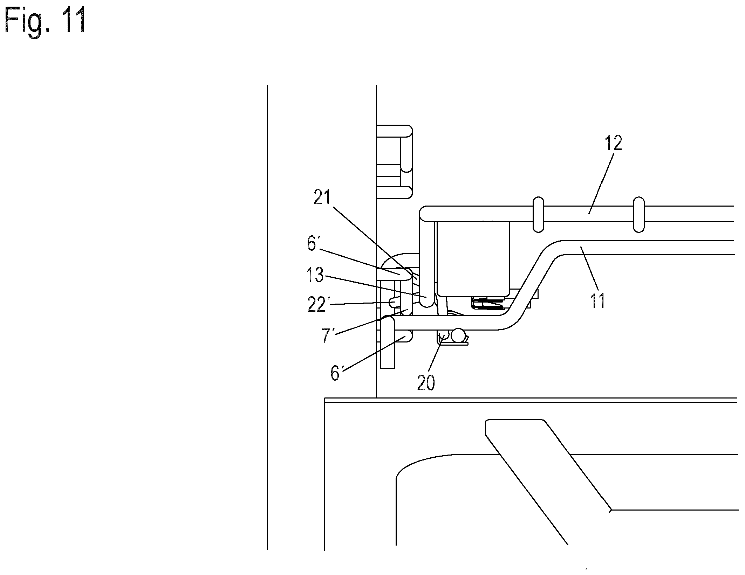

In Figur 11 ist die Verriegelungsmechanik des Haushaltsgerätes 1 der Figur 9 gezeigt. Das Riegelelement 20 umfasst einen schräg nach oben hervorstehenden Betätigungsabschnitt 21, der von dem Mitnehmer 13 kontaktiert werden kann, um das Riegelelement 20 beim Einfahren zu verschwenken. Das Riegelelement 20 befindet sich in der abgesenkten Position, und ein Verriegelungsabschnitt 22 hintergreift einen Verriegelungsvorsprung 7', so dass das Racksystem 10 nicht aus dem Innenraum 3 herausgezogen werden kann. Das Racksystem 10 liegt dabei mit dem stationären Teil 11 auf einer Auflageleiste 6' auf.

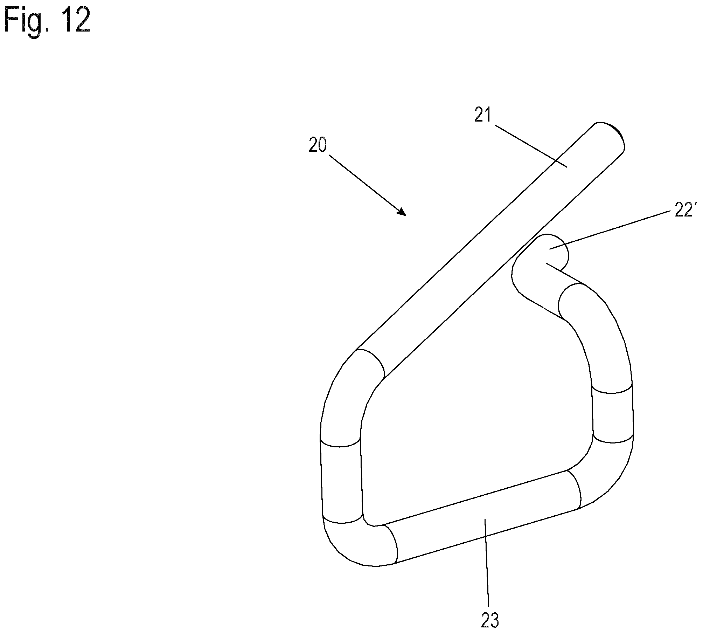

In Figur 12 ist das modifizierte Riegelelement 20 gezeigt, das wieder aus einem metallischen Draht gebildet ist und einen stabförmigen Betätigungsabschnitt 21 aufweist, der integral mit einem Lagerabschnitt 23 ausgebildet ist. An den Lagerabschnitt 23 schließt sich ein Verriegelungsabschnitt 22' an, der kürzer als der Verriegelungsabschnitt 22 in Figur 8 ist und nur als Anschlag dient, der mit dem Verriegelungsvorsprung 7, 7' in Eingriff gebracht werden kann.

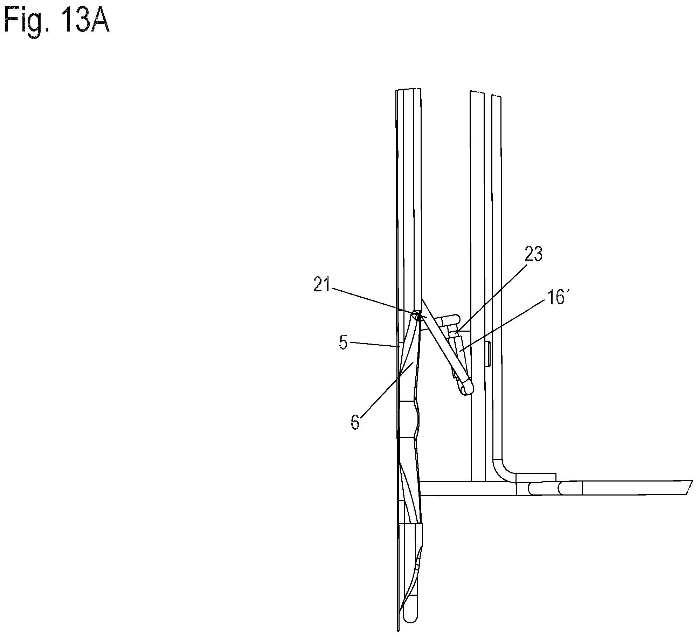

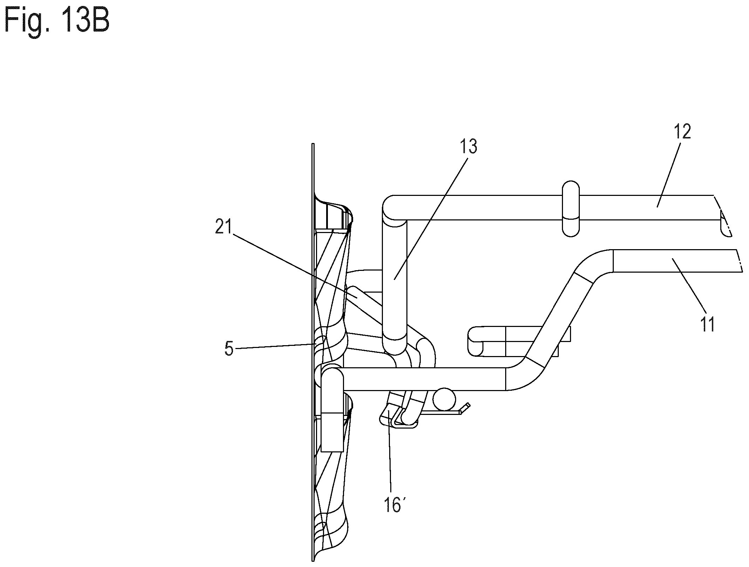

In den Figuren 13A und 13B ist ein modifizierter Verriegelungsmechanismus für ein Racksystem 10 gezeigt. Der Mitnehmer 13 kann den Betätigungsabschnitt 21 bewegen, so dass der Verriegelungsabschnitt 22 weg von dem Wandelement 5 verschwenkt wurde. Dabei dreht das Riegelelement 20 in einer modifizierten Klammer 16', die den Lagerabschnitt 23 nicht parallel zu der Auszugsrichtung des bewegbaren Teils 12 sondern winklig dazu hält, beispielsweise in einem Winkel von kleiner 30° parallel zu der Auszugsrichtung des bewegbaren Teils 12. Der Lagerabschnitt 23 ist hier horizontal ausgerichtet.

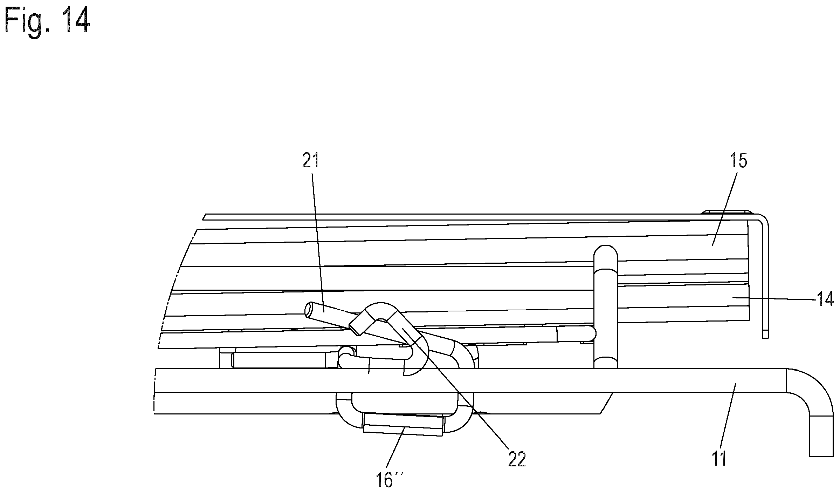

**In** Figur 14 ein modifizierter Verriegelungsmechanismus für ein Racksystem 10 gezeigt, bei der das Riegelelement 20 in einer modifizierten Klammer 16" gehalten ist. Der Lagerabschnitt 23 ist nicht horizontal ausgerichtet, sondern geneigt zur Horizontalen gehalten. Optional kann der Lagerabschnitt 23 in einem Winkel von kleiner 30° parallel zu der Auszugsrichtung des bewegbaren Teils 12 ausgerichtet sein.

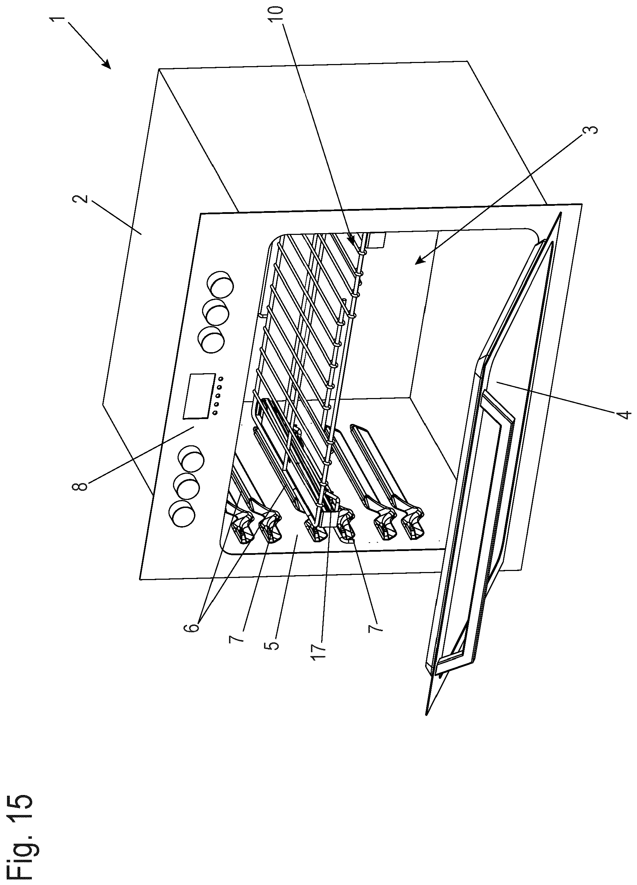

**In** Figur 15 ist ein modifiziertes Haushaltsgerät 1 in Form eines Backofens mit einem Gehäuse 2 gezeigt, bei dem in einem Innenraum 3 ein Racksystem 10 angeordnet ist. Das Gehäuse 2 umfasst an gegenüberliegenden Seiten jeweils ein Wandelement 5 mit mehreren Auflageleisten 6, und auf eine der Auflageleisten 6 ist ein stationäres Teil 11 des Racksystems 10 aufgelegt. An dem stationären Teil 11 ist ein bewegbares Teil 12 mit einem Gitter verfahrbar gehalten, wobei zwischen dem stationären Teil 11 und dem bewegbaren Teil 12 eine Auszugsführung 17 mit relativ zueinander bewegbaren Schienen vorgesehen ist.

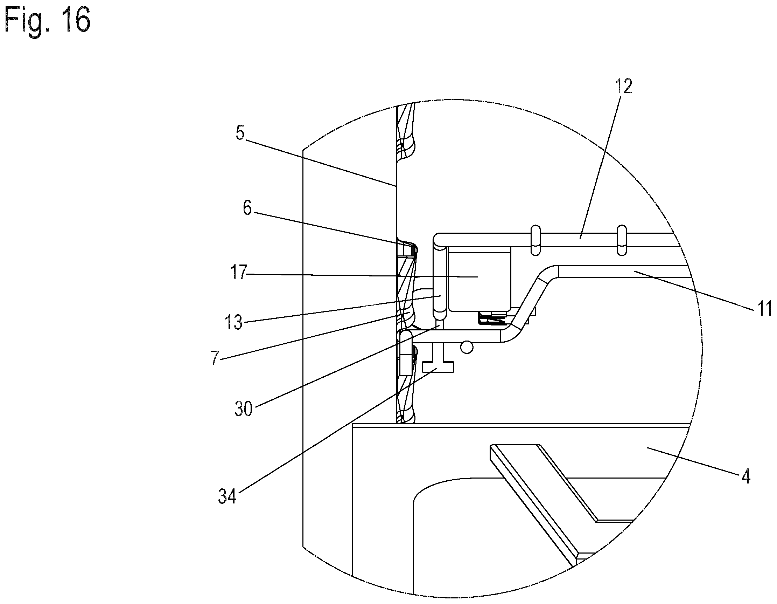

Wie der Figur 16 entnehmbar ist, befindet sich unterhalb eines Mitnehmers 13 ein Riegelelement 30, mittels dem der stationäre Teil 11 an einem Verriegelungsvorsprung 7 an dem Wandelement 5 verriegelt werden kann. Der Mitnehmer 13 befindet sich oberhalb des Riegelelements 30 und kann bei einer Bewegung in oder gegen die Auszugsrichtung das Riegelelement 30 verschwenken.

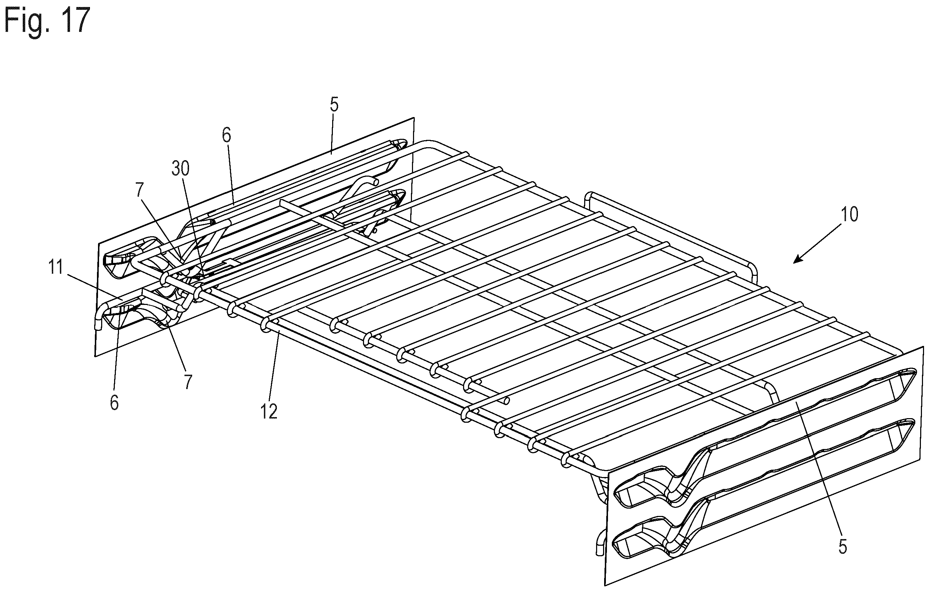

**In** Figur 17 ist das Racksystem 10 zwischen den beiden Wandelementen 5 in einer eingefahrenen Position gezeigt. Das bewegbare Teil 12 ist oberhalb des stationären Teils 11 und zwischen den beiden Wandelementen 5 angeordnet.

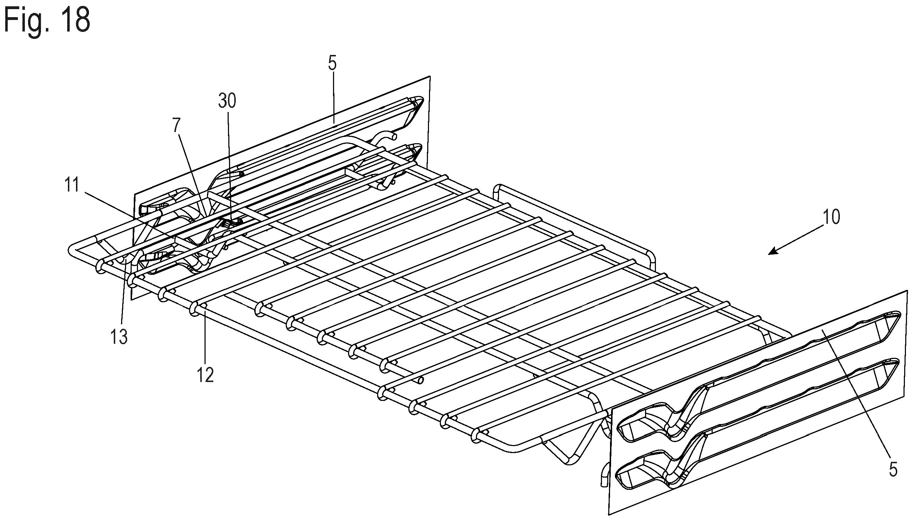

**In** Figur 18 ist das bewegbare Teil 12 des Racksystems 10 in Auszugsrichtung relativ zu dem stationären Teil 11 bewegt worden, und der an dem bewegbaren Teil 12 vorgesehene Mitnehmer 13 ist von dem Riegelelement 30 entkoppelt, so dass das stationäre Teil 11 nun an dem Verriegelungsvorsprung 7 des Wandelementes 5 verriegelt ist.

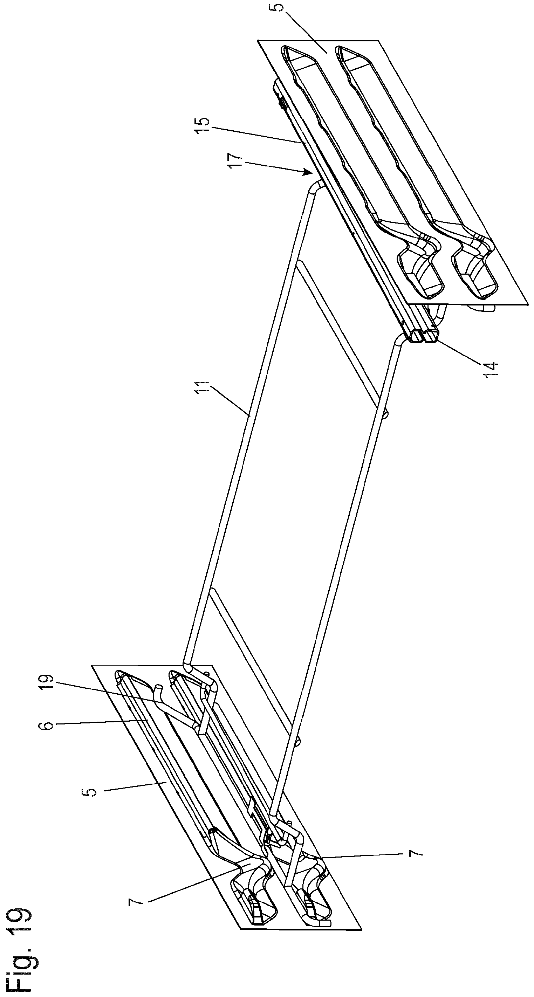

In Figur 19 ist der stationäre Teil 11 des Racksystems 10 ohne den bewegbaren Teil 12 dargestellt. Der stationäre Teil 11 liegt an gegenüberliegenden Seiten mit einer Strebe auf einer Auflageleiste 6 auf und besitzt im rückwärtigen Bereich einen nach oben ragenden Vorsprung 19, der an der Unterseite einer Auflageleiste 6 anlegbar ist, um eine Kippbewegung des stationären Teils 11 zu verhindern. An dem stationären Teil 11 ist an gegenüberliegenden Seiten eine Auszugsführung 17 mit einer stationären Schiene 14 und mindestens einer bewegbaren Schiene 15 vorgesehen.

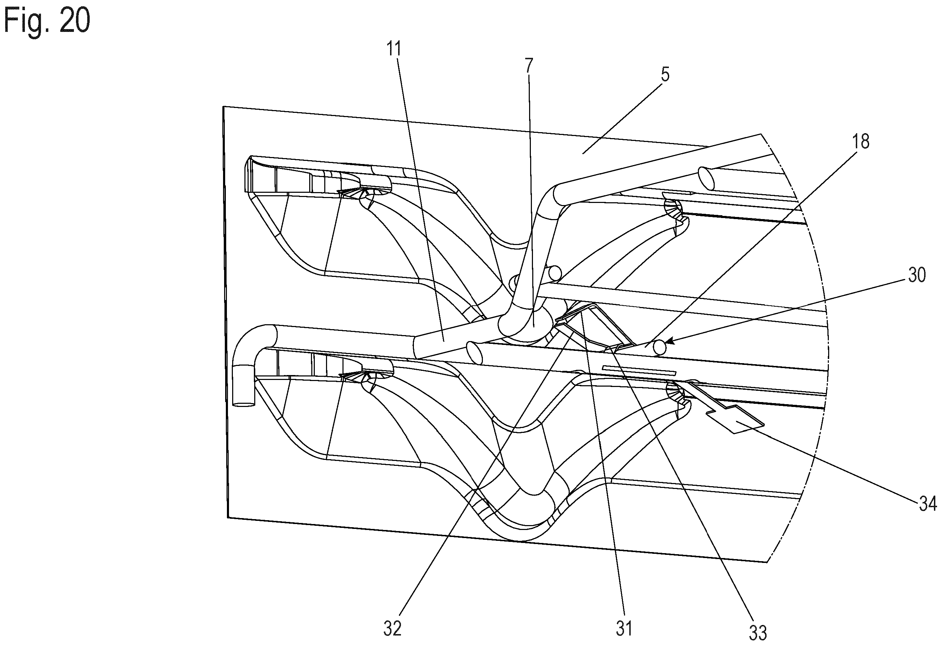

In Figur 20 ist der Verriegelungsmechanismus des Riegelelementes 30 im Detail dargestellt. Das Riegelelement 30 umfasst einen Betätigungsabschnitt 31, der nach oben ragt und eine Anlaufschräge aufweist, gegen die der Mitnehmer 13 beim Einfahren des bewegbaren Teils 12 gelangt, um das Riegelelement 30 zu verschwenken. Das Riegelelement 30 umfasst ferner einen Verriegelungsabschnitt 32, der benachbart zu dem Verriegelungsvorsprung 7 an dem Wandelement 5 angeordnet ist und in einer angehobenen Position für eine Verriegelung des Riegelelementes 30 sorgt. Zwischen dem Verriegelungsabschnitt 32 und dem Betätigungsabschnitt 31 ist ein Lagerabschnitt 33 ausgebildet, der um eine Achse 18 des stationären Teils 11 drehbar gelagert ist. Der Lagerabschnitt 33 ist dabei zwischen dem Verriegelungsabschnitt 32 und dem Betätigungsabschnitt 31 angeordnet, und das Riegelelement 30 ist als Doppelhebel ausgebildet mit mindestens zwei Hebelarmen. Im vorliegenden Fall ist das Riegelelement 30 mit einem dritten Hebel in Form eines Auslegers 34 verbunden, der sich ausgehend von dem Lagerabschnitt 33 erstreckt. Der Ausleger 34 bildet ein Gewichtselement aus, um das Riegelelement 30 um die Achse 18 in eine verriegelte Position vorzuspannen.

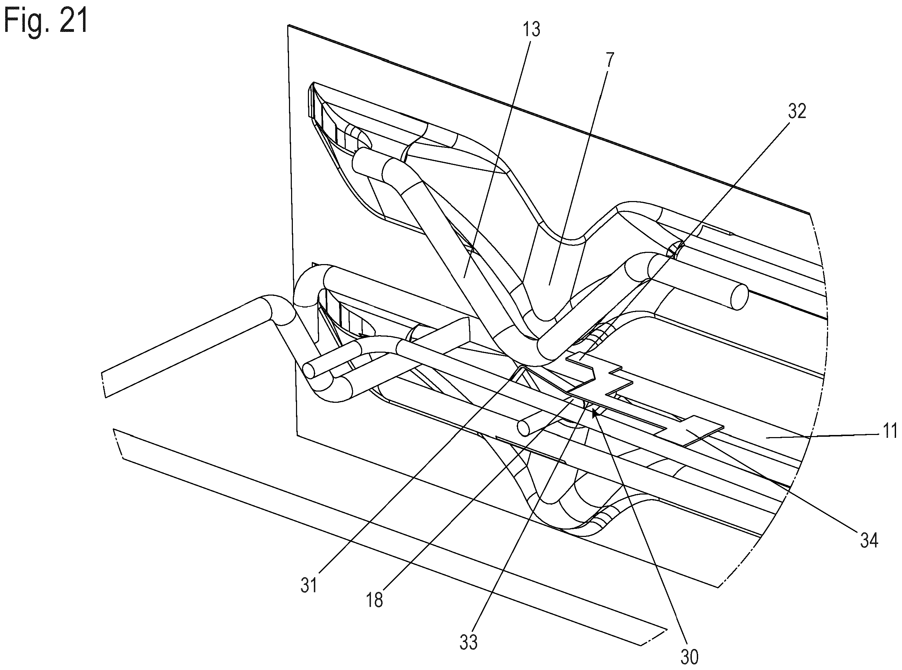

Gelangt der Mitnehmer 13 an dem bewegbaren Teil 12 in eine Einzugsposition, wird das Riegelelement 30 gegen den Uhrzeigersinn um die Achse 18 verschwenkt, wie dies in Figur 21 gezeigt ist. Das Riegelelement 30 ist dann im Wesentlichen horizontal ausgerichtet, und der Verriegelungsabschnitt 32 gelangt außer Eingriff mit dem Verriegelungsabschnitt 7, und der Ausleger 34 steht von dem Lagerabschnitt 33 im Wesentlichen horizontal hervor.

Bei dem Ausführungsbeispiel der Figuren 15 bis 21 ist das Riegelelement 30 aus einem gebogenen und gestanzten Metallblech hergestellt, es kann aber auch aus einem anderen Material bestehen und mit einem anderen Verfahren hergestellt werden.

Der Mitnehmer 13 ist in den dargestellten Ausführungsbeispielen integral mit dem bewegbaren Teil 12 ausgebildet, kann aber auch als zusätzliches Teil an diesem befestigt sein. Ferner ist es möglich, den Mitnehmer 13 an der bewegbaren Schiene 15 der Auszugsführung zu fixieren oder auszubilden.

Vorzugsweise ist an gegenüberliegenden Seiten des Racksystems 10 jeweils mindestens ein Riegelelement 20 vorgesehen, um den stationären Teil 11 sicher in dem Haushaltsgerät 1 fixieren zu können. Optional ist es auch ausreichend, nur ein Riegelelement 20 auf einer Seite vorzusehen.

### Bezugszeichenliste

- 1: Haushaltsgerät
- 2: Gehäuse
- 3: Innenraum
- 4: Tür
- 5, 5': Wandelement
- 6: Auflageleiste
- 6': Stab
- 7, 7': Verriegelungsvorsprung
- 10: Racksystem
- 11: stationäres Teil
- 12: bewegbares Teil
- 13: Mitnehmer
- 14: stationäre Schiene
- 15: bewegbare Schiene
- 16, 16', 16": Klammer
- 17: Auszugsführung
- 18: Achse
- 19: Vorsprung
- 20: Riegelelement
- 21: Betätigungsabschnitt
- 22, 22': Verriegelungsabschnitt
- 23: Lagerabschnitt
- 30: Riegelelement
- 31: Betätigungsabschnitt
- 32: Verriegelungsabschnitt
- 33: Lagerabschnitt
- 34: Ausleger

## Patentansprüche

1. Haushaltsgerät (1) mit einem Racksystem (10) und mit einem Innenraum (3) zur Aufnahme des Racksystems (10), wobei an gegenüberliegenden Seiten des Innenraumes (3) jeweils ein Wandelement (5, 5') vorgesehen ist und an mindestens einem der Wandelemente (5, 5') ein Verriegelungsvorsprung (7, 7') angeordnet ist, wobei das Racksystem (10) ein im Innenraum (3) angeordneten stationären Teil (11) und ein über Führungen zumindest teilweise vor den Innenraum bewegbaren Teil (12) aufweist, und an dem stationären Teil (11) ein Riegelelement (20, 30) zum lösbaren Eingriff mit dem Verriegelungsvorsprung (7, 7') vorgesehen ist, das über einen Mitnehmer (13) an dem bewegbaren Teil (12) in eine entriegelte Position bewegbar ist, **dadurch gekennzeichnet, dass** das Riegelelement (20, 30) ausschließlich durch die Schwerkraft von der entriegelten Position in die verriegelte Position bewegbar ist, wobei sich das Anheben des Riegelelementes (20, 30) von der abgesenkten Verriegelungsposition in die angehobene entriegelte Position sich dabei auf den Schwerpunkt des Riegelelementes (20, 30) bezieht, der in der abgesenkten Verriegelungsposition tiefer ist als in der angehobenen entriegelten Position, und das Riegelelement (20, 30) über den Mitnehmer (13) von einer abgesenkten Verriegelungsposition in eine angehobene entriegelte Position oder von einer angehobenen Verriegelungsposition in eine abgesenkte entriegelte Position bewegbar ist.

2. Haushaltsgerät nach Anspruch 1, **dadurch gekennzeichnet, dass** das Riegelelement (20, 30) verschwenkbar an dem stationären Teil (11) gelagert ist.

3. Haushaltsgerät nach Anspruch 2, **dadurch gekennzeichnet, dass** das Riegelelement (20, 30) um eine Achse drehbar gelagert ist, die sich im Wesentlichen parallel zu der Auszugsrichtung des bewegbaren Teils (12) erstreckt.

4. Haushaltsgerät nach einem der vorhergehenden Ansprüche, **dadurch gekennzeichnet, dass** der Verriegelungsvorsprung (7, 7') bezogen auf eine Auszugsrichtung des bewegbaren Teils (12) im Bereich einer vorderen Hälfte des Wandelementes (5, 5') angeordnet ist.

5. Haushaltsgerät nach einem der vorhergehenden Ansprüche, **dadurch gekennzeichnet, dass** ein an dem Riegelelement (20, 30) vorgesehener Verriegelungsabschnitt (22, 22', 32) bei einer Zugkraft auf den stationären Teil (11) in Auszugsrichtung auf Druck belastet ist.

6. Haushaltsgerät nach einem der vorhergehenden Ansprüche, **dadurch gekennzeichnet, dass** das Riegelelement (20, 30) einen mit dem Mitnehmer (13) in Eingriff bringbaren Betätigungsabschnitt (21, 31), einen an dem Verriegelungsvorsprung (7, 7') anlegbaren Verriegelungsabschnitt (22, 22', 32) und einen Lagerabschnitt (23, 33) zur drehbaren Lagerung des Riegelelementes (20, 30) aufweist, wobei der Lagerabschnitt (23, 33) zwischen dem Betätigungsabschnitt (21, 31) und dem Verriegelungsabschnitt (22, 22', 32) angeordnet ist.

7. Haushaltsgerät nach einem der vorhergehenden Ansprüche, **dadurch gekennzeichnet, dass** der Mitnehmer (13) in vertikaler Richtung oberhalb eines Betätigungsabschnittes (31) des Riegelelementes (30) angeordnet ist und den Betätigungsabschnitt (31) in der eingefahrenen Position des bewegbaren Teils (12) nach unten drückt.

8. Haushaltsgerät nach einem der vorhergehenden Ansprüche, **dadurch gekennzeichnet, dass** das Riegelelement (30) einen Ausleger (34) aufweist, mittels dem ein Verriegelungsabschnitt (32) des Riegelelementes (30) in eine angehobene verriegelte Position durch Schwerkraft vorgespannt ist.

9. Haushaltsgerät nach einem der vorhergehenden Ansprüche, **dadurch gekennzeichnet, dass** an dem stationären Teil (11) eine Klammer (16, 16', 16") fixiert ist, die eine Lageraufnahme für das verschwenkbare Riegelelement (20, 30) bildet.

10. Haushaltsgerät nach einem der vorhergehenden Ansprüche, **dadurch gekennzeichnet, dass** das Riegelelement (20) aus einem gebogenen Draht gebildet ist.

11. Haushaltsgerät nach einem der vorhergehenden Ansprüche, **dadurch gekennzeichnet, dass** der stationäre Teil (11) eine erste Schiene (14) umfasst und das bewegbare Teil eine zweite Schiene (15) umfasst, die über Wälzkörper verfahrbar aneinander gehalten sind.

12. Haushaltsgerät nach einem der vorhergehenden Ansprüche, **dadurch gekennzeichnet, dass** an dem stationären Teil (11) benachbart zu jedem Wandelement (5, 5') ein Riegelelement (20, 30) vorgesehen ist, das in Eingriff mit einem Verriegelungsvorsprung (7, 7') bringbar ist.

13. Haushaltsgerät nach einem der vorhergehenden Ansprüche, **dadurch gekennzeichnet, dass** der Verriegelungsvorsprung (7) an einem Wandelement (5) aus einem geprägten Metallblech ausgebildet ist.

14. Haushaltsgerät nach einem der Ansprüche 1 bis 12, **dadurch gekennzeichnet, dass** der Verriegelungsvorsprung (7') an einem Seitengitter ausgebildet ist.

15. Haushaltsgerät nach einem der vorhergehenden Ansprüche, **dadurch gekennzeichnet, dass** das Haushaltsgerät (1) als Backofen ausgebildet ist.

## Claims

1. Household appliance (1) with a rack system (10) and an interior space (3) for accommodating the rack system (10), wherein a wall element (5, 5') is provided on opposite sides of the interior space (3) and a locking projection (7, 7') is arranged on at least one of the wall elements (5, 5'), wherein the rack system (10) comprises a stationary part (11) arranged in the interior space (3) and a part (12) movable at least partially in front of the interior space via guides, and a locking element (20, 30) is provided on the stationary part (11) for detachable engagement with the locking projection (7, 7'), which can be moved into an unlocked position via a driver (13) on the movable part (12), **characterised in that** the locking element (20, 30) can be moved from the unlocked position into the locked position exclusively by gravity, wherein the lifting of the locking element (20, 40) from the lowered locked position into the raised unlocked position relates to the centre of gravity of the locking element (20, 30) which in the lowered locked position is lower than in the raised unlocked position, and the locking element (20, 30) can be moved via the driver from a lowered locking position into a raised unlocked position or from a raised locking position into a lowered unlocked position.

2. Household appliance according to claim 1, **characterised in that** the locking element (20, 30) is pivotably mounted on the stationary part (11).

3. Household appliance according to claim 2, **characterised in that** the locking element (20, 30) is rotatable about an axis which extends substantially parallel to the pull-out direction of the movable part (12).

4. Household appliance according to one of the preceding claims, **characterised in that** the locking projection (7, 7') is arranged in the region of a front half of the wall element (5, 5') with respect to a pull-out direction of the movable part (12).

5. Household appliance according to one of the preceding claims, **characterised in that** a locking section (22, 22', 32) provided on the locking element (20, 30) is loaded in compression when a pulling force is applied to the stationary part (11) in the pull-out direction.

6. Household appliance according to one of the preceding claims, **characterised in that** the locking element (20, 30) has an actuating section (21, 31) which can be brought into engagement with the driver (13), a locking section (22, 22', 32) which can be brought into abutment to the locking projection (7, 7') and a bearing section (23, 33) for rotatable mounting of the locking element (20, 30), wherein the bearing section (23, 33) is arranged between the actuating section (21, 31) and the locking section (22, 22', 32).

7. Household appliance according to one of the preceding claims, **characterised in that** the driver (13) is arranged in the vertical direction above an actuating section (31) of the locking element (30) and presses the actuating section (31) downwards in the run-in position of the movable part (12).

8. Household appliance according to one of the preceding claims, **characterised in that** the locking element (30) comprises a cantilever (34) by means of which a locking section (32) of the locking element (30) is biased into a raised, locked position by gravity.

9. Household appliance according to one of the preceding claims, **characterised in that** a bracket (16, 16', 16") is fixed to the stationary part (11), which bracket forms a bearing receptable for the pivotable locking element (20, 30).

10. Household appliance according to any one of the preceding claims, **characterised in that** the locking element (20) is formed from a bent wire.

11. Household appliance according to one of the preceding claims, **characterised in that** the stationary part (11) includes a first rail (14) and the movable part includes a second rail (15), which are held together displaceably via rolling elements.

12. Household appliance according to one of the preceding claims, **characterised in that** a locking element (20, 30) is provided on the stationary part (11) adjacent to each wall element (5, 5'), which locking element can be brought into engagement with a locking projection (7, 7').

13. Household appliance according to one of the preceding claims, **characterised in that** the locking projection (7) is formed on a wall element (5) from an embossed metal sheet.

14. Household appliance according to any one of claims 1 to 12, **characterised in that** the locking projection (7') is formed on a side grate.

15. Household appliance according to one of the preceding claims, **characterised in that** the household appliance (1) is formed as a baking oven.

## Revendications

1. Appareil ménager (1) comprenant un système de rayonnage (10) et un espace intérieur (3) destiné à recevoir le système de rayonnage (10), dans lequel un élément de paroi (5, 5') est prévu sur les côtés opposés de l'espace intérieur (3) et une saillie de verrouillage (7, 7') est disposée sur au moins l'un des éléments de paroi (5, 5'), le système un dispositif d'entraînement (10) comprenant une partie fixe (11) disposée dans l'espace intérieur (3) et une partie mobile (12) au moins partiellement devant l'espace intérieur via des guides, et un élément de verrouillage (20, 30) est prévu sur la partie fixe (11) pour s'engager de manière amovible avec la saillie de verrouillage (7, 7'), qui peut être déplacée dans une position déverrouillée via un dispositif d'entraînement (13) sur la partie mobile (12), **caractérisé en ce que** l'élément de verrouillage (20, 30) peut être déplacé de la position déverrouillée à la position verrouillée exclusivement par gravité, le soulèvement de l'élément de verrouillage (20, 40) de la position verrouillée abaissée à la position déverrouillée relevée se rapportant au centre de gravité de l'élément de verrouillage (20, 30) qui, dans la position verrouillée abaissée, est plus bas que dans la position déverrouillée relevée, et l'élément de verrouillage (20, 30) peut être déplacé via le dispositif d'entraînement d'une position de verrouillage abaissée à une position de déverrouillage relevée ou d'une position de verrouillage relevée à une position de déverrouillage abaissée .

2. Appareil ménager selon la revendication 1, **caractérisé en ce que** l'élément de verrouillage (20, 30) est monté de manière pivotante sur la partie fixe (11).

3. Appareil ménager selon la revendication 2, **caractérisé en ce que** l'élément de verrouillage (20, 30) peut tourner autour d'un axe qui s'étend sensiblement parallèlement à la direction d'extraction de la partie mobile (12).

4. Appareil ménager selon l'une des revendications précédentes, **caractérisé en ce que** la saillie de verrouillage (7, 7') est disposée dans la région d'une moitié avant de l'élément de paroi (5, 5') par rapport à une direction d'extraction de la partie mobile (12).

5. Appareil ménager selon l'une des revendications précédentes, **caractérisé en ce qu'**une section de verrouillage (22, 22', 32) prévue sur l'élément de verrouillage (20, 30) est soumise à une compression lorsqu'une force de traction est appliquée à la partie fixe (11) dans la direction d'extraction.

6. Appareil ménager selon l'une des revendications précédentes, **caractérisé en ce que** l'élément de verrouillage (20, 30) comporte une section d'actionnement (21, 31) qui peut être amenée en prise avec le dispositif d'entraînement (13), une section de verrouillage (22, 22', 32) qui peut être amenée en butée contre la saillie de verrouillage (7, 7') et une section de palier (23, 33) pour le montage rotatif de l'élément de verrouillage (20, 30), la section de palier (23, 33) étant disposée entre la section d'actionnement (21, 31) et la section de verrouillage (22, 22', 32).

7. Appareil ménager selon l'une des revendications précédentes, **caractérisé en ce que** le dispositif d'entraînement (13) est disposé dans le sens vertical au-dessus d'une section d'actionnement (31) de l'élément de verrouillage (30) et presse la section d'actionnement (31) vers le bas dans la position d'enclenchement de la partie mobile (12).

8. Appareil ménager selon l'une des revendications précédentes, **caractérisé en ce que** l'élément de verrouillage (30) comprend un cantilever (34) au moyen duquel une section de verrouillage (32) de l'élément de verrouillage (30) est sollicitée par gravité dans une position relevée et verrouillée.

9. Appareil ménager selon l'une des revendications précédentes, **caractérisé en ce qu'**un support (16, 16', 16") est fixé à la partie fixe (11), lequel support forme un logement de palier pour l'élément de verrouillage pivotant (20, 30).

10. Appareil ménager selon l'une quelconque des revendications précédentes, **caractérisé en ce que** l'élément de verrouillage (20) est formé à partir d'un fil métallique plié.

11. Appareil ménager selon l'une des revendications précédentes, **caractérisé en ce que** la partie fixe (11) comprend un premier rail (14) et la partie mobile comprend un deuxième rail (15), qui sont maintenus ensemble de manière déplaçable par des éléments roulants.

12. Appareil ménager selon l'une des revendications précédentes, **caractérisé en ce qu'**un élément de verrouillage (20, 30) est prévu sur la partie fixe (11) à proximité de chaque élément de paroi (5, 5'), lequel élément de verrouillage peut être mis en prise avec une saillie de verrouillage (7, 7').

13. Appareil ménager selon l'une des revendications précédentes, **caractérisé en ce que** la saillie de verrouillage (7) est formée sur un élément de paroi (5) à partir d'une tôle emboutie.

14. Appareil ménager selon l'une quelconque des revendications 1 à 12, **caractérisé en ce que** la saillie de verrouillage (7') est formée sur une grille latérale.

15. Appareil ménager selon l'une des revendications précédentes, **caractérisé en ce que** l'appareil électroménager (1) est conçu comme un four de cuisson.
